**Europäisches Patentamt**

**European Patent Office**

**Office européen des brevets**

(11) Veröffentlichungsnummer: **0 194 353 B1**

(12) **EUROPÄISCHE PATENTSCHRIFT**

(45) Veröffentlichungstag der Patentschrift:
30.03.88

(51) Int. Cl.⁴: **B 23 H 7/02**, B 23 H 11/00

(21) Anmeldenummer: **85116160.4**

(22) Anmeldetag: **18.12.85**

(54) Vorrichtung zur Sicherung von Ausfallstücken an einer Elektroerosionsmaschine.

(30) Priorität: **15.03.85 DE 3509418**

(43) Veröffentlichungstag der Anmeldung:
**17.09.86 Patentblatt 86/38**

(45) Bekanntmachung des Hinweises auf die Patenterteilung:
**30.03.88 Patentblatt 88/13**

(84) Benannte Vertragsstaaten:
**CH DE FR GB IT LI LU SE**

(56) Entgegenhaltungen:
**DE - C - 2 755 724**

(73) Patentinhaber: **AG für industrielle Elektronik AGIE Losone bei Locarno, CH-6616 Losone/Locarno (CH)**

(72) Erfinder: **Del Santo, Cesare, Via San Gottardo 170, CH-6648 Minusio (CH)**

(74) Vertreter: **EGLI-EUROPEAN PATENT ATTORNEYS, Widenmayerstrasse 5, D-8000 München 22 (DE)**

ACTORUM AG

## Beschreibung

Die Erfindung bezieht sich auf eine Vorrichtung zur Sicherung der Ausfallstücke an einer Elektroerosionsmaschine gemäss dem Oberbegriff des Patentanspruches 1.

Eine derartige Vorrichtung ist aus der DE-C2-27 55 724 bekannt. Als Auffangplatte für die Ausfallstücke dient dabei ein Teil des Auflagetisches, der in einer Richtung (Y-Richtung) zusammen mit dem Werkstück verfahrbar ist und sich damit relativ zur Drahtelektrode verschiebt.

Damit muss der Auflagetisch einen Längsschlitz in Y-Richtung haben, dessen Länge dem vollen Verfahrweg zwischen Elektrode und Werkstück entspricht. In der anderen Bewegungsrichtung (X-Richtung) ist der Auflagetisch dagegen nicht verfahrbar, so dass bei einer Schneidbewegung in dieser Richtung das Werkstück sich relativ gegenüber dem Auflagetisch bewegt. Mit anderen Worten steht der Auflagetisch bei einem Schneidvorschub in X-Richtung gegenüber der Elektrode still. Bei dieser Vorrichtung werden also für den Auflagetisch bzw. die Auffangplatte zwei zusätzliche Gleitlager benötigt, nämlich ein Gleitlager, das eine Verschiebung des Auflagetisches gegenüber dem Fuss der Maschine in X-Richtung ermöglicht, sowie ein zweites Gleitlager, das eine Relativverschiebung des Auflagetisches gegenüber dem Kreuzkoordinatensupport in X-Richtung ermöglicht. Dies ist recht aufwendig. Weiterhin muss der Auflagetisch aufgrund des in Y-Richtung verlaufenden Schlitzes grösser sein als der Verfahrweg, damit eine ausreichende Stabilität gewährleistet ist. Damit wird entweder der mögliche Verfahrweg verkleinert oder die Maschine sperriger. Schliesslich kann bei dieser Konstruktion eine Entsorgung der Ausfallstücke nur nach oben erfolgen.

Generell müssen beim Ausschneiden von mehreren Öffnungen in einem Werkstück mittels Elektroerosion (z. B. Folgeschnitt—Matrizen) im automatischen Betrieb die ausgeschnittenen «Ausfallteile» gesichert und entsorgt werden.

Hierzu sind neben der eingangs erwähnten DE-PS 27 55 724 noch folgende Systeme bekannt:

Eine weitere Möglichkeit besteht darin, dass das Material des Werkstückes in der Öffnung komplett wegerodiert wird, so dass überhaupt kein Ausfallstück im engeren Sinne entsteht. Dies erfordert allerdings eine längere Erodierzeit, verbraucht unnötige Energie und führt zu einem unnötig grossen Verbrauch von Elektrodendraht.

Noch eine andere Methode besteht darin, dass beim Schneiden bzw. Erodieren von Öffnungen das Ausfallstück noch mit Haltestegen im Werkstück gesichert wird, die Öffnung also noch nicht vollständig geschnitten wird. In einem späteren Bearbeitungsvorgang wird dann der Haltesteg weggebrochen. Dies erfordert einen weiteren Arbeitsvorgang und meistens auch noch eine Nachbearbeitung des Grates, der nach dem Wegbrechen des Haltesteges übrigbleibt.

Mit der Erfindung sollen diese Nachteile beseitigt werden.

Aufgabe der Erfindung ist es daher, die Vorrichtung der eingangs genannten Art dahingehend zu verbessern, dass bei einfacher Konstruktion der Vorrichtung die Ausfallstücke leicht entsorgt werden können.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Der Grundgedanke der Erfindung besteht also darin, das beim Schneiden bzw. Erodieren entstehende Ausfallstück noch im Werkstück zu belassen, es durch eine dicht unterhalb des Werkstückes angeordnete Auffangplatte zu halten, es erst später zu entsorgen und dabei die Auffangplatte bewegungsstarr zur Elektrode zu halten. In allen Schneidrichtungen (X- und Y-Richtung) wird also das Werkstück relativ zur Auffangplatte bewegt. Mit anderen Worten ist die Auffangplatte starr mit dem unteren Drahtführungskopf verbunden, so dass sie für den Durchtritt der Elektrode nur ein relativ kleines Loch braucht und nicht einen sich durch die ganze Länge der Auffangplatte erstreckenden Schlitz. Auch werden keine zusätzlichen Lager für die Auffangplatte benötigt.

Bei einer Variante der Erfindung geschieht die Entsorgung dadurch, dass am Ende der Auffangplatte ein Auffangbehälter angeordnet ist, in welchen das Ausfallteil fällt, wenn das Werkstück so weit bewegt wurde, dass die Öffnung über dem Auffangbehälter zu liegen kommt.

Bei einer anderen Variante, die vorzugsweise bei konischen Öffnungen mit sich nach oben verbreiterndem Radius anwendbar ist, ist ein Hebezylinder vorgesehen, der elektromagnetisch oder mechanisch wie z. B. durch Greifer oder Sauger das Ausfallstück nach oben aus der Öffnung herauszieht und es durch gesteuerte Bewegung des Hebezylinders zum Auffangbehälter oder einem Transportband fördert.

Bei einer noch anderen Variante besitzt der untere Arm der Maschine eine Öffnung, durch welche die Ausfallstücke hindurchfallen. Vorzugsweise ist der untere Arm hohl, wobei die Ausfallstücke von dort abtransportiert werden können, beispielsweise mittels eines zylindergesteuerten Schiebers oder eines Transportbandes. Auch ein manuelles Entfernen ist natürlich möglich. Bei dieser Variante wird die Maschine am wenigsten durch die Ausfallstücke behindert und auch die Werkstückspanneinrichtung muss keine Rücksicht auf einen eventuell vorhandenen Auffangbehälter nehmen.

Mit der Erfindung können somit Öffnungen vollständig geschnitten werden, wobei die Ausfallstücke bei der Bearbeitung anderer Öffnungen nicht stören. Eine Nachbearbeitung des Werkstückes ist nicht erforderlich.

Im folgenden wird die Erfindung anhand von Ausführungsbeispielen im Zusammenhang mit der Zeichnung ausführlicher erläutert. Es zeigt:

Fig. 1 eine schematische Seitenansicht einer Elektroerosionsmaschine mit der Vorrichtung nach der Erfindung, wobei beide Varianten der Erfindung dargestellt sind;

Fig. 2 eine ähnliche schematische Seitenansicht, bei der die Ausfallstücke nach unten in den Auffangbehälter fallen;

Fig. 3 eine Ansicht ähnlich Fig. 2 im Betriebszustand der Entsorgung, wobei der Erosionsvorgang bereits beendet ist;

Fig. 4 eine Darstellung ähnlich Fig. 3, wobei jedoch einzelne Ausfallstücke bereits entsorgt werden, während der Erosionsvorgang an anderen Öffnungen noch weiter stattfindet;

Fig. 5 eine schematische Seitenansicht der Elektroerosionsmaschine, bei der Ausfallstücke nach oben entsorgt werden;

Fig. 6 eine schematische Seitenansicht der Elektroerosionsmaschine, bei der die Ausfallstücke durch eine Öffnung im unteren Arm entsorgt werden, wobei zur Entsorgung ein zylindergesteuerter Schieber vorgesehen ist;

Fig. 7 eine Darstellung ähnlich Fig. 6 zur Erläuterung der Arbeitsweise des zylindergesteuerten Schiebers; und

Fig. 8 eine weitere Variante der Erfindung, bei der die Ausfallstücke ebenfalls durch eine Öffnung im unteren Arm der Maschine entsorgt werden, von dort jedoch mittels eines gesteuerten Transportbandes abgeführt werden.

Gleiche Bezugszeichen in den einzelnen Figuren bezeichnen gleiche Teile.

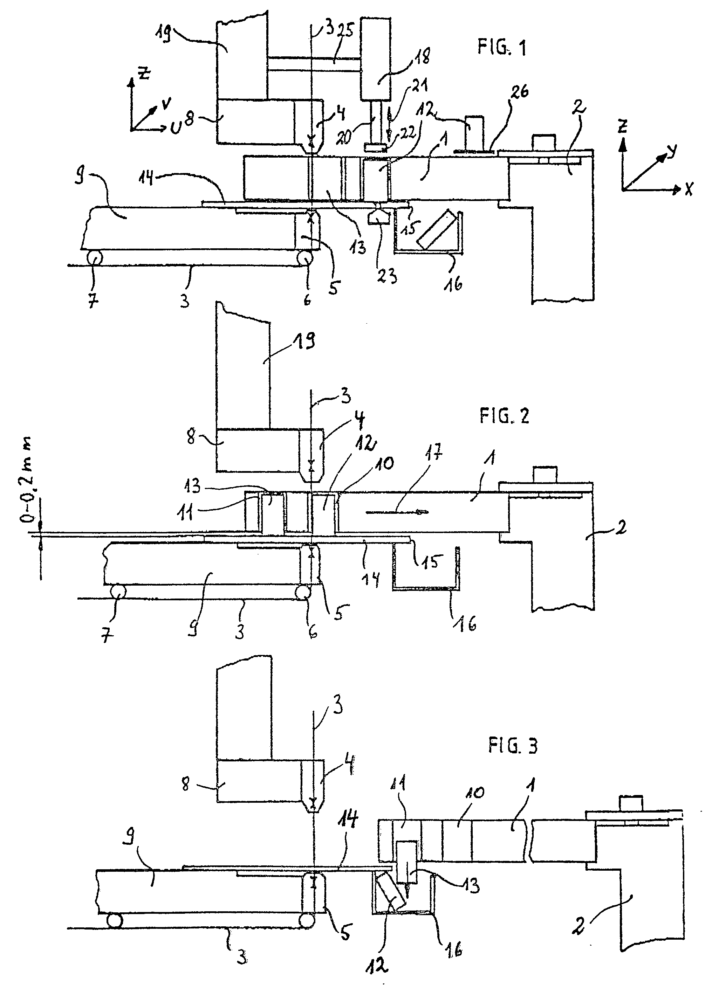

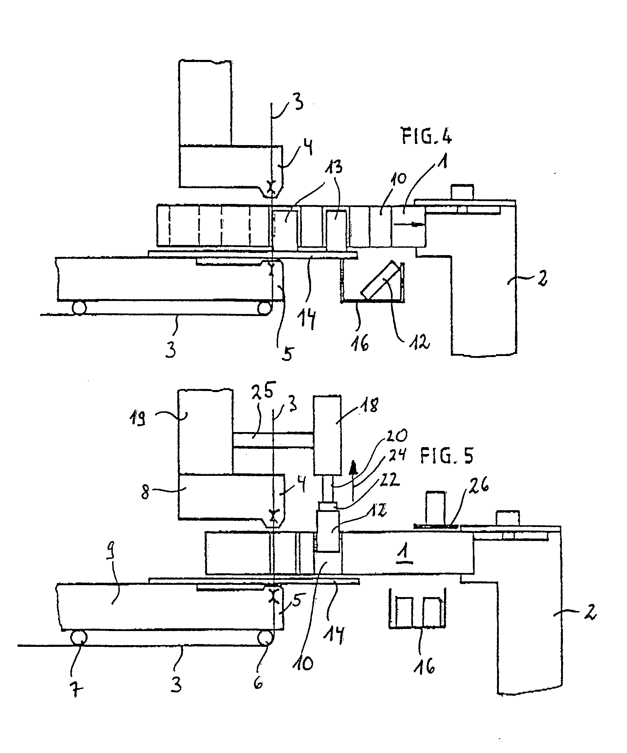

Ein Werkstück 1, das durch einen Erodiervorgang mit mehreren Öffnungen versehen werden soll, ist in herkömmlicher Weise in einem Werkstückspannsystem 2 eingespannt und kann über nicht näher dargestellte Werkstückschlitten in X-Y-Richtung verschoben werden. Der Erodiervorgang erfolgt in bekannter Weise durch eine Drahtelektrode 3, die oberhalb und unterhalb des Werkstückes 1 in Drahtführungsköpfen 4 und 5 geführt ist. Der Draht wird über schematisch angedeutete Umlenkrollen 6 und 7 in bekannter Weise zu- bzw. abgeführt. Die Drahtführungsköpfe 4 und 5 sind in bekannter Weise an ggf. verschiebbaren Armen 8 und 9 gehalten. Mit den Bezugszeichen 10 und 11 sind zwei getrennte Öffnungen in dem Werkstück 1 bezeichnet, welche durch Erodieren erzeugt wurden. In diesen Öffnungen befinden sich die Ausfallteile 12 bzw. 13, die gesichert und entsorgt werden müssen. Zur Sicherung der Ausfallteile ist nun unterhalb des Werkstückes in sehr geringem Abstand zu dessen Unterkante eine Auffangplatte 14 angeordnet, die sich seitlich über den Erodierbereich erstreckt. Der Abstand zwischen Oberfläche der Auffangplatte 14 und Unterseite des Werkstückes 1 ist sehr klein und liegt vorzugsweise zwischen 0,1 und 0,2 mm. Die Auffangplatte 14 kann dabei beispielsweise am unteren Arm 9 befestigt sein. Selbstverständlich ist sie so ausgebildet, beispielsweise durch eine Öffnung, dass die Drahtelektrode 3 durch sie hindurchtreten kann. Ist nun – wie in Fig. 2 zu erkennen – die eine Öffnung 10 vollständig hergestellt, so fällt das Ausfallstück aufgrund seines Eigengewichtes die kurze Strecke bis zur Auffangplatte 14 herab, wo es dann gehalten wird. Eine weitere Öffnung kann erodiert werden, wozu das Werkstück 1 durch X-Y-Verschiebung bewegt wird. Die Ausfallstücke gleiten während dieser Bewegung auf der Oberfläche der Auffangplatte 14. Je nach Anordnung der zu erodierenden Öffnungen des Werkstückes gelangt nun durch X-Y-Verschiebung des Werkstückes die eine oder andere Öffnung zum Rand 15 der Auffangplatte 14. Dort ist ein Auffangbehälter 16 angeordnet, in welchen das entsprechende Ausfallstück fällt. Diese entsprechende Bewegung des Werkstückes 1 kann, wie aus Fig. 4 zu erkennen, zu einem Zeitpunkt stattfinden, zu dem noch andere Öffnungen geschnitten werden. Die Schneidfolge der einzelnen Öffnungen kann, wie aus den Fig. 2 und 3 zu erkennen ist, auch so festgelegt sein, dass zuerst alle Öffnungen nacheinander erodiert werden und die jeweiligen Ausfallstücke (z. B. 12 und 13) auf der Auffangplatte 14 gehalten werden, bis nach Beendigung des Erodiervorganges das Werkstück 1 in Richtung des Pfeiles 17 der Fig. 2 bewegt wird, so dass nacheinander dann die Ausfallstücke 12 und 13 in den Auffangbehälter 16 fallen, was in Fig. 3 dargestellt ist.

Die bisher im Zusammenhang mit den Fig. 2 bis 4 beschriebene Möglichkeit der Entsorgung kann naturgemäss nur bei solchen Öffnungen durchgeführt werden, bei denen das Ausfallstück nach unten aus dem Werkstück herausfallen kann, also bei parallel geschnittenen Teilen oder konischen Teilen mit Öffnung nach unten.

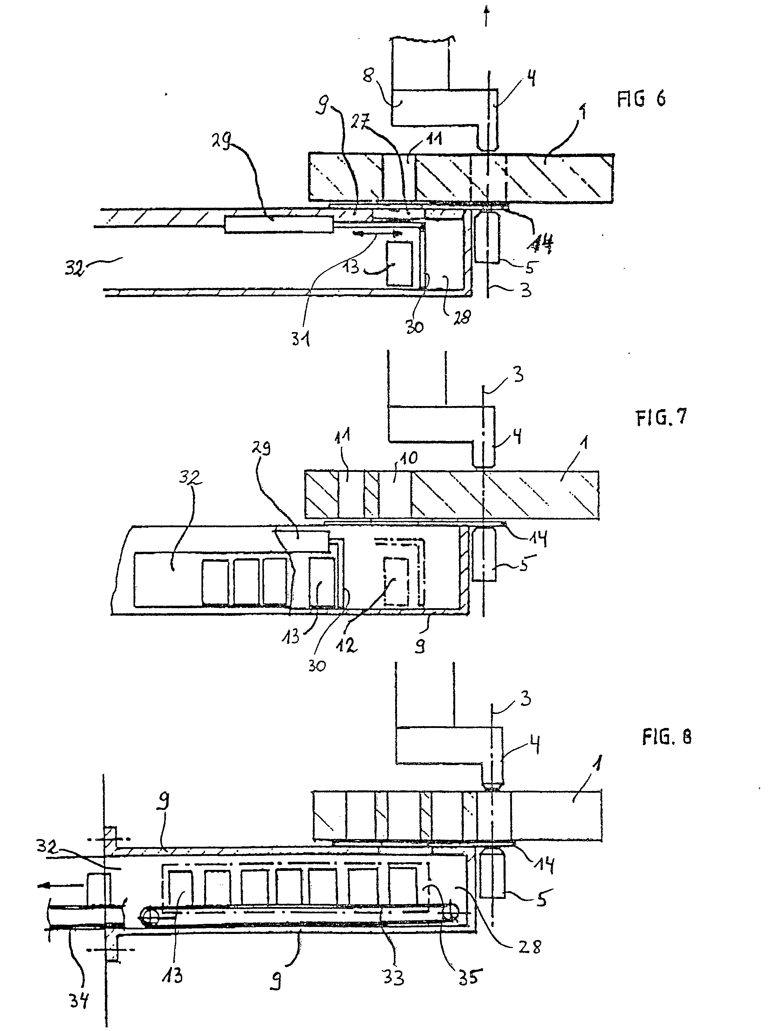

Bei konischen Teilen mit Konusöffnung nach oben sieht die Erfindung ein anderes Entsorgungssystem vor. Hierzu ist ein Hebezylinder 18 (Fig. 1 und 5) vorgesehen, der am oberen Arm 8 angebracht ist und über eine Steuereinrichtung 19 verschoben und betätigt werden kann. Der Hebezylinder 18 besitzt eine nach unten ausfahrbare Hebestange 20, die in Richtung des Pfeiles 21 verschiebbar ist. An ihrem unteren Ende trägt sie ein «Greiforgan» 22, das beispielsweise ein Elektromagnet, ein mechanischer Greifer, ein Saugsystem etc. sein kann. Das Greiforgan 22 kann, insbesondere wenn es als Elektromagnet ausgebildet ist, zusätzlich noch einen Ausstosser in Form eines Stössels haben, der separat in Z-Richtung bewegbar ist. Dieser – nicht dargestellte – Stössel dient dazu, das Ausfallstück sicher von dem Greiforgan zu trennen, was beispielsweise bei einem Elektromagneten ansonsten nicht immer gewährleistet ist. Gegenüberliegend zu dem Hebezylinder 18 kann an der Unterseite der Auffangplatte 14 noch eine «Ausstosseranordnung» 23 vorgesehen sein, die durch eine Öffnung in der Auffangplatte 14 von unten auf das dort befindliche Ausfallteil wirkt. Beispielsweise kann hierfür eine Pressluftdüse vorhanden sein oder auch ein mechanischer Ausstosser in Form eines Stössels. Die Ausstosseranordnung 23 kann, insbesondere bei Verwendung eines Zangengreifers für das Greiforgan 22, das Ausfallteil so weit nach oben aus dem Werkstück 1 herausdrücken, dass es seitlich von dem Greiforgan erfasst werden kann.

Sobald durch entsprechende X-Y-Verschiebung des Werkstückes 1 ein Ausfallteil unter dem Hebezylinder 18 liegt, wird dieser betätigt, so dass sein Greiforgan das Ausfallteil erfasst und nach oben in Richtung des Pfeiles 24 (Fig. 5) aus der Öffnung herauszieht. Der Hebezylinder 18 kann dann über die pneumatische Steuerung 19 durch Verschieben seines Tragarmes 25 so verfahren werden, dass er das ergriffene Ausfallteil zu einem Transportband 26 bewegt, welches oberhalb des Werkstückes angeordnet ist. Durch entsprechende Betätigung des «Greifers» 22, beispielsweise Abschalten des Stromes eines Elektromagneten, wird dann das Ausfallteil auf dem Transportband 26 abgelegt und von dort zu dem Auffangbehälter 16 oder einem weiteren Auffangbehälter gefördert. Unter Umständen ist es auch möglich, den Auffangbehälter 16 so zu gestalten, dass er bei allen möglichen Stellungen des Werkstückes 1 noch von oben zugänglich bleibt, also nicht vollständig vom Werkstück abgedeckt wird, so dass es möglich ist, den Hebezylinder über diese Öffnung zu verfahren und von dort das gehaltene Ausfallteil direkt in den Auffangbehälter 16 fallen zu lassen. In diesem Falle kann das Transportband 26 fortgelassen werden.

Der Hebezylinder 18 kann nach einer Variante der Erfindung gegenüber dem oberen Arm 8 separat in Z-Richtung verfahren werden, beispielsweise durch eine Lagerung an einem Schlitten, was durch die Steuereinrichtung 19 angedeutet ist.

Bei moderneren Elektroerosionsmaschinen ist allerdings meistens der obere Arm 8 separat verschiebbar und zwar in einer parallel zur X-Y-Ebene liegenden Ebene, die üblicherweise mit den Koordinaten UV bezeichnet wird, sowie auch in vertikaler Z-Richtung. Zur Vereinfachung der Konstruktion kann in diesem Falle der Tragarm 25 des Hebezylinders 18 direkt mit dem oberen Arm 8 gekoppelt sein, so dass kein eigener Antrieb für die Verschiebung des Hebezylinders 18 in Z-Richtung erforderlich ist. Hierdurch wird der Aufwand deutlich verringert. Man nimmt allerdings in Kauf, dass während der Entsorgung der Ausfallstücke durch den Hebezylinder 18 der Erodiervorgang unterbrochen wird.

Diese Variante ist natürlich nicht nur bei konischen Werkstücken mit Konusöffnung nach oben möglich, sondern auch zur Entsorgung sonstiger Ausfallteile anwendbar.

Natürlich ist es auch möglich, den Hebezylinder direkt oberhalb des Auffangbehälters anzuordnen, wobei dann das Werkstück über X-Y-Verschiebung so weggefahren wird, dass der Hebezylinder das ergriffene Ausfallteil nach unten fallen lassen kann.

Bei den Varianten der Fig. 6 bis 8 erfolgt die Entsorgung durch eine Öffnung 27 des unteren Armes 9 der Maschine. Nach einer Variante erstreckt sich die Auffangplatte 14 nur bis zum Rand dieser Öffnung 27, während nach einer anderen Variante die Auffangplatte 14 eine entsprechende Öffnung aufweist, die kongruent zur Öffnung 27 liegt.

In den Aufführungsbeispielen der Fig. 6 bis 8 ist der untere Arm 9 der Maschine hohl ausgebildet, so dass die Auffangstücke in dessen Hohlraum 28 fallen können. Zur Entsorgung der Ausfallstücke aus diesem Hohlraum muss dieser natürlich eine seitliche Öffnung 32 haben, die sich vorzugsweise an dem vom Arbeitsbereich abgewandten Ende des Armes 9 befindet.

Bei der Variante der Fig. 6 und 7 werden die in den Hohlraum 28 gefallenen Ausfallstücke seitlich in Richtung der Austragsöffnung 32 mittels eines von einem Zylinder 29 betätigten Schiebers 30 gefördert. Der Schieber 30 ist dabei in Richtung des Pfeiles 31 hin- und herbewegbar. Seine Bewegung erfolgt gesteuert in Abhängigkeit von der X-Y-Bewegung des Werkstückes 1, so dass stets ein herabgefallenes Ausfallstück aus dem Bereich unterhalb der Öffnung 27 wegtransportiert wird, so dass dort kein Stau erfolgen kann. Der Arbeitshub des Zylinders 29 kann relativ klein sein, da — wie aus Fig. 7 zu erkennen — aufeinanderfolgende Ausfallstücke das jeweils in Richtung zur Austragsöffnung 32 weiter vorne liegende Ausfallstück verschieben. An der Austragsöffnung 32 kann dann ein Auffangbehälter angeordnet sein. Es ist auch möglich, die Ausfallstücke von dort manuell zu entfernen.

Bei der Variante der Fig. 8 wird zum Abtransport der im Hohlraum 28 befindlichen Ausfallstücke ein gesteuertes Transportband verwendet, dessen eines Ende bis mindestens unter die Öffnung 27 reicht und dessen austragsseitiges Ende sich in etwa bis zur Austragsöffnung 32 erstreckt. Dieses Transportband kann kontinuierlich laufen, bevorzugt ist allerdings, es nur taktweise gesteuert anzutreiben, nämlich immer dann, wenn ein Ausfallstück herabgefallen ist. An das Transportband 33, das sich im Hohlraum 28 des unteren Armes 9 befindet, kann sich im Bereich der Austragsöffnung 32 ein weiteres verlängertes Transportband 34 anschliessen, das die Ausfallstücke zu einem entfernt gelegenen Auffangbehälter oder einer sonstigen Sammelstelle für abgetragenes Material fördert. Die Transportbänder 33 und 34 können natürlich auch zu einem Transportband zusammengefasst sein. Auch ist es möglich, die Ausfallstücke in Transportbehälter 35 fallen zu lassen bzw. auf eine Palette, wobei dann dieser Transportbehälter 35 bzw. die Palette vom Transportband 33 bzw. 34 abgefördert wird.

## Patentansprüche

1. Vorrichtung zur Sicherung von Ausfallstücken an einer Drahtschneide-Elektroerosionsmaschine, wobei die Ausfallstücke durch Elektroerosion von Öffnungen in einem Werkstück entstehen, mit einer dicht unterhalb des Werkstückes (1) angeordneten Auffangplatte (14), die sich seitlich über die Arbeitszone der Elektroerosionsmaschine hinaus erstreckt und die Ausfallstücke (12, 13) abstützt, dadurch gekennzeichnet, dass die Auffangplatte (14) bewegungsstarr mit dem unteren Drahtführungskopf (5) der Elektroerosionsmaschine angebracht ist.

2. Vorrichtung nach Anspruch 1, dadurch gekennzeichnet, dass der Abstand zwischen der Oberseite der Auffangplatte (14) und der Unterseite des Werkstückes (1) zwischen 0,0 und 0,2 mm liegt, vorzugsweise zwischen 0,1 und 0,2 mm.

3. Vorrichtung nach einem oder mehreren der Ansprüche 1 bis 2, dadurch gekennzeichnet, dass die Auffangplatte (14) sich in der X-Y-Ebene so weit erstreckt, dass sie den vollen Verfahrweg der Relativverschiebung zwischen Werkstück und Elektrode abdeckt.

4. Vorrichtung nach Anspruch 3, dadurch gekennzeichnet, dass die Auffangplatte (14) eine Entsorgungsöffnung aufweist, durch welche die Ausfallstücke in einen unterhalb der Entsorgungsöffnung angeordneten Auffangbehälter (16) fallen können.

5. Vorrichtung nach einem oder mehreren der Ansprüche 1 bis 4, dadurch gekennzeichnet, dass am seitlichen Rand (15) der Auffangplatte (14) ein Auffangbehälter (16) angeordnet ist, in welchen die Ausfallstücke (12, 13) hineinfallen, wenn durch gesteuerte X-Y-Bewegung des Werkstückes (1) die Öffnungen (10, 11) mit den in ihnen befindlichen Ausfallstücken (12, 13) oberhalb des Auffangbehälters (16) zu liegen kommen.

6. Vorrichtung nach einem oder mehreren der Ansprüche 1 bis 5, dadurch gekennzeichnet, dass der untere Arm (9) der Elektroerosionsmaschine seitlich neben dem Arbeitsbereich eine Öffnung (27) aufweist, durch welche die Ausfallstücke (12, 13) hindurchfallen können.

7. Vorrichtung nach Anspruch 6, dadurch gekennzeichnet, dass ein Rand der Auffangplatte (14) an die Öffnung (27) des unteren Armes (9) angrenzt.

8. Vorrichtung nach Anspruch 6, dadurch gekennzeichnet, dass die Auffangplatte (14) kongruent zu der Öffnung (27) des unteren Armes (9) eine Öffnung aufweist.

9. Vorrichtung nach einem oder mehreren der Ansprüche 6 bis 8, dadurch gekennzeichnet, dass der untere Arm (9) der Elektroerosionsmaschine hohl ist und eine seitliche Austragsöffnung am zur Erosionszone abgewandten Ende besitzt.

10. Vorrichtung nach einem oder mehreren der Ansprüche 6 bis 9, dadurch gekennzeichnet, dass im Hohlraum (28) des unteren Armes (9) ein steuerbarer Zylinder (29) angeordnet ist, welcher einen Schieber (30) betätigt, der im Hohlraum vorhandene Ausfallstücke (12, 13) in Richtung zur Austragsöffnung (32) des unteren Armes verschiebt.

11. Vorrichtung nach einem oder mehreren der Ansprüche 6 bis 9, dadurch gekennzeichnet, dass im Hohlraum (28) des unteren Armes (9) ein Transportband (33) angeordnet ist, das sich bis unterhalb der Öffnung (27) erstreckt und herabgefallene Ausfallteile (12, 13) in Richtung auf die Austragsöffnung (32) des unteren Armes (9) transportiert.

12. Vorrichtung nach Anspruch 11, dadurch gekennzeichnet, dass das Transportband (33) taktweise gesteuert antreibbar ist.

13. Vorrichtung nach einem oder mehreren der Ansprüche 9 bis 12, dadurch gekennzeichnet, dass sich an die Austragsöffnung (32) des unteren Armes (9) ein verlängertes Transportband (34) anschliesst.

14. Vorrichtung nach einem der Ansprüche 11 bis 13, dadurch gekennzeichnet, dass auf dem Transportband (33) ein Auffangbehälter bzw. eine Palette (35) befindet, in welchen bzw. auf welche die Ausfallstücke (12, 13) fallen.

15. Vorrichtung nach einem oder mehreren der Ansprüche 1 bis 14, gekennzeichnet durch einen oberhalb des Werkstückes angeordneten, seitlich (in X-Y-Ebene) gegenüber der Elektrode (3) versetzt angeordneten Hebezylinder (18), an dessen nach unten ausfahrbarer Zylinderstange (21) ein Greiforgan (22) zum Ergreifen eines Ausfallstückes (12, 13) befestigt ist.

16. Vorrichtung nach Anspruch 15, dadurch gekennzeichnet, dass das Greiforgan ein Elektromagnet, eine Greiferzange, ein Saugmechanismus etc. ist.

17. Vorrichtung nach Anspruch 15 oder 16, dadurch gekennzeichnet, dass gegenüberliegend zu dem Hebezylinder an der Unterseite der Auffangplatte (14) eine Ausstosseranordnung (23) angeordnet ist, welche durch eine Öffnung in der Auffangplatte (14) eine nach oben gerichtete Kraft auf die Ausfallstücke ausübt.

18. Vorrichtung nach Anspruch 17, dadurch gekennzeichnet, dass die Ausstosseranordnung (23) eine Pressluftdüse, ein mechanischer Ausstosser oder ähnliches ist.

19. Vorrichtung nach einem der Ansprüche 15 bis 18, dadurch gekennzeichnet, dass der Hebezylinder in X-Y-Richtung verschiebbar ist, insbesondere durch eine pneumatische Steuerung (19).

20. Vorrichtung nach einem oder mehreren der Ansprüche 15 bis 19, dadurch gekennzeichnet, dass oberhalb des Werkstückes (1) ein von dem Hebezylinder (18) anfahrbares Transportband (26) angeordnet ist, zum Abtransport von Ausfallteilen.

21. Vorrichtung nach einem oder mehreren der Ansprüche 15 bis 20, dadurch gekennzeichnet, dass im Greiforgan (22) zusätzlich ein gesteuert verschiebbarer Stössel angeordnet ist, zum Auswerfen der Ausfallstücke aus dem Greiforgan.

22. Vorrichtung nach einem oder mehreren der Ansprüche 15 bis 21, dadurch gekennzeichnet, dass der Hebezylinder (18) in Z-Richtung zusammen mit dem oberen Arm (18) verschiebbar ist.

**Claims**

1. A catching device for pieces of waste in a wire-cutting electroerosion machine wherein the pieces of waste are produced by electroerosion of openings in a workpiece, having a collecting plate (14) arranged close underneath the workpiece (1) that extends laterally over the working area of the electroerosion machine and supports the pieces of waste (12, 13), characterised in that the collecting plate (14) is rigidly mounted relative to the lower wire guide head (5) of the electroerosion machine.

2. A device according to claim 1, characterised in that the distance between the top of the collecting plate (14) and the bottom of the workpiece (1) is between 0.0 and 0.2 mm, preferably between 0.1 and 0.2 mm.

3. A device according to one or both of claims 1 and 2, characterised in that the collecting plate (14) extends in the X-Y plane far enough to cover the whole distance of travel of the relative displacement of workpiece and electrode.

4. A device according to claim 3, characterised in that the collecting plate (14) has a disposal opening through which the pieces of waste can fall on to a receptacle (16) arranged below the disposal opening.

5. A device according to any one or more of claims 1 to 4, characterised in that the lateral edge (15) of the collecting plate (14) a receptacle (16) is arranged into which the pieces of waste (12, 13) fall when the openings (10, 11) and the pieces of waste (12, 13) in them are brought above the receptacle (16) by controlled X-Y movement of the workpiece (1).

6. A device according to any one or more of claims 1 to 5, characterised in that the lower arm (9) of the electroerosion machine has a side opening (27) beside the working area through which the pieces of waste (12, 13) can fall.

7. A device according to claim 6, characterised in that an edge of the collecting plate (14) borders the opening (27) in the lower arm (9).

8. A device according to claim 6, characterised in that the collecting plate (14) has an opening congruent with the opening (27) in the lower arm (9).

9. A device according to any one or more of claims 6 to 8, characterised in that the lower arm (9) of the electroerosion machine is hollow and has a lateral discharge opening at the end facing away from the erosion zone.

10. A device according to any one or more of claims 6 to 9, characterised in that in the cavity (28) of the lower arm (9) there is arranged a controllable cylinder (29) which operates a pusher (30) that displaces pieces of waste (12, 13) present in the cavity towards the discharge opening (32) of the lower arm.

11. A device according to any one or more of claims 6 to 9, characterised in that a conveyor belt (33) is arranged in the cavity (28) of the lower arm (9) that extends to beneath the opening (27) and transports fallen pieces of waste (12, 13) towards the discharge opening (32) of the lower arm (9).

12. A device according to claim 11, characterised in that the conveyor belt (33) can be driven controllably and cyclically.

13. A device according to any one or more of claims 9 to 12, characterised in that a long conveyor belt (34) adjoins the discharge opening (32) of the lower arm (9).

14. A device according to any one or more of claims 11 to 13, characterised in that on the conveyor belt (33) there is a receptacle or a palette (35) into or on to which the pieces of waste (12, 13) fall.

15. A device according to any one or more of claims 1 to 14, characterised by a lifting cylinder (18) arranged above the workpiece and displaced laterally (in the X-Y plane) relative to the electrode (3), on to the cylinder rod (21) of which is fixed a gripping means (23) for gripping a piece of waste (12, 13).

16. A device according to claim 15, characterised in that the gripping means is an electromagnet, gripping jaws, a suction mechanism, etc.

17. A device according to claim 15 or 16, characterised in that an ejection arrangement (23) is arranged opposite the lifting cylinder underneath the collecting plate (14) which exerts an upwardly directed force on the pieces of waste through an opening in the collecting plate (14).

18. A device according to claim 12, characterised in that the ejection arrangement (23) is a compressed air nozzle, a mechanical ejector or the like.

19. A device according to any one of claims 15 to 18, characterised in that the lifting cylinder is displaceable in the X-Y direction, in particular by a pneumatic control (19).

20. A device according to any one or more of claims 15 to 19, characterised in that a conveyor belt (21) that can be driven forward by the lifting cylinder (18) is arranged above the workpiece (1), to carry away pieces of waste.

21. A device according to any one or more of claims 15 to 20, characterised in that in the gripping means (22) there is additionally arranged a controllably displaceable plunger to separate the pieces of waste from the gripping means.

22. A device according to any one or more of claims 15 to 21, characterised in that the lifting cylinder (18) can be displaced in the Y direction together with the upper arm (8).

**Revendications**

1. Dispositif de collecte de pièces de chute d'une machine d'électroérosion à coupe par fil, ces pièces de chute provenant de l'électroérosion d'ouvertures usinées dans une pièce à usiner, le dispositif comportant une plaque collectrice (14) qui est disposée juste au-dessous de la pièce à usiner (1), qui s'étend latéralement au-dessus de la zone de travail de la machine d'électroérosion et qui supporte les pièces de chute (12, 13), caractérisé en ce que la plaque collectrice (14) est montée rigidement solidaire de la tête inférieure (5) de guidage de fil de la machine d'électroérosion.

2. Dispositif selon la revendication 1, caractérisé en ce que la distance entre la face supérieure de la plaque collectrice (14) et la face inférieure de la pièce à usiner (1) est comprise entre 0,0 et 0,2 mm, plus préférablement entre 0,1 et 0,2 mm.

3. Dispositif selon une ou plusieurs des revendications 1 à 2, caractérisé en ce que la plaque collectrice (14) s'étend dans le plan X-Y jusqu'à une distance telle qu'elle recouvre la totalité du parcours de déplacement relatif entre la pièce à usiner et l'électrode.

4. Dispositif selon la revendication 3, caractérisé en ce que la plaque collectrice (14) comporte une ouverture d'évacuation à travers laquelle les pièces de chute peuvent tomber dans un récipient collecteur (16) disposé en dessous de l'ouverture d'évacuation.

5. Dispositif selon une ou plusieurs des revendications 1 à 4, caractérisé en ce qu'il est prévu sur le bord latéral (15) de la plaque collectrice (14) un récipient collecteur (16), dans lequel tombent les pièces de chute (12, 13) lorsque, par déplacement contrôlé X-Y de la pièce à usiner (1), les ouvertures (10, 11) et les pièces de chute (12, 13) qui s'y trouvent viennent au-dessus du récipient collecteur (16).

6. Dispositif selon une ou plusieurs des revendications 1 à 5, caractérisé en ce que le bras inférieur (9) de la machine d'électroérosion présente latéralement, à côté de la zone de travail, une ouverture (27) à travers laquelle peuvent tomber les pièces de chute (12, 13).

7. Dispositif selon la revendication 6, caractérisé en ce qu'un bord de la plaque collectrice (14) vient à proximité de l'ouverture (27) du bras inférieur (9).

8. Dispositif selon la revendication 6, caractérisé en ce que la plaque collectrice (14) présente une ouverture congruente à l'ouverture (27) du bras inférieur (9).

9. Dispositif selon une ou plusieurs des revendications 6 à 8, caractérisé en ce que le bras inférieur (9) de la machine d'électroérosion est creux et comporte une ouverture latérale de déchargement à l'extrémité opposée à la zone d'érosion.

10. Dispositif selon une ou plusieurs des revendications 6 à 9, caractérisé en ce qu'un vérin susceptible d'être commandé (29) est disposé dans l'espace creux (28) du bras inférieur (9), ce vérin actionnant un coulisseau (30) qui fait glisser, en direction de l'ouverture de déchargement (32) du bras inférieur, les pièces de chute (12, 13) se trouvant dans l'espace creux.

11. Dispositif selon une ou plusieurs des revendications 6 à 9, caractérisé en ce qu'une bande transporteuse (33) est disposée dans l'espace creux (28) du bras inférieur (9), cette bande transporteuse s'étendant jusqu'au-dessous de l'ouverture (27) et transportant en direction de l'ouverture de déchargement (32) du bras inférieur (9) les pièces de chute (12, 13) qui y sont tombées.

12. Dispositif selon la revendication 11, caractérisé en ce que la bande transporteuse (33) est à entraînement par saccades ou par impulsions.

13. Dispositif selon une ou plusieurs des revendications 9 à 12, caractérisé en ce qu'une bande transporteuse de prolongement (34) se raccorde à l'ouverture d'évacuation (32) du bras inférieur (9).

14. Dispositif selon l'une des revendications 11 à 13, caractérisé en ce qu'un récipient collecteur, ou une palette (35), est prévu sur la bande transporteuse (33), les pièces de chute (12, 13) tombant dans ou respectivement sur ce récipient ou cette palette.

15. Dispositif selon une ou plusieurs des revendications 1 à 14, caractérisé par un vérin de levage (18) disposé au-dessus de la pièce à usiner et décalé latéralement (dans le plan X-Y) par rapport à l'électrode (3), un organe de saisie (22) destiné à la saisie d'une pièce de chute (12, 13) étant fixé à la tige de piston mobile vers le bas (21) de ce vérin.

16. Dispositif selon la revendication 15, caractérisé en ce que l'organe de saisie est un électroaimant, une pince de serrage, un système d'aspiration, etc.

17. Dispositif selon la revendication 15 ou 16, caractérisé en ce qu'un système éjecteur (23) est disposé sur la face inférieure de la plaque collectrice (14) à l'opposé du vérin de levage, ce système éjecteur exerçant, à travers une ouverture de la plaque collectrice (14), une force dirigée vers le haut sur les pièces de chute.

18. Dispositif selon la revendication 17, caractérisé en ce que le système éjecteur (23) est une tuyère à air comprimé, un éjecteur mécanique ou similaire.

19. Dispositif selon une ou plusieurs des revendications 15 à 18, caractérisé en ce que le vérin de levage est susceptible de se déplacer dans la direction X-Y, en particulier via une commande pneumatique (19).

20. Dispositif selon une ou plusieurs des revendications 15 à 19, caractérisé en ce qu'une bande transporteuse (26) actionnée par le vérin de levage (18) est disposée au-dessus de la pièce à usiner (1), cette bande servant au transport d'évacuation des pièces de chute.

21. Dispositif selon une ou plusieurs des revendications 15 à 20, caractérisé en ce qu'un poussoir glissant commandé est disposé en supplément sur l'organe de saisie (22), afin d'assurer l'éjection des pièces de chute hors de l'organe de saisie.

22. Dispositif selon une ou plusieurs des revendications 15 à 21, caractérisé en ce que le vérin de levage (18) est susceptible de se déplacer dans la direction Z avec le bras supérieur (8).

FIG. 1

FIG. 2

0-0,2 mm

FIG. 3

FIG.4

FIG.5

0 194 353

FIG 6

FIG. 7

FIG. 8

13